# EUROPEAN PATENT APPLICATION

(11) **EP 2 101 260 A2**
(43) Date of publication of application: **16.09.2009**
(21) Application number: 09002583.4
(22) Date of filing: 24.02.2009
(51) Int. Cl.: G06F 9/46

(54) **Service flow process method and apparatus**

(30) Priority: 13.03.2008 JP 2008064825
(71) Applicant: Canon Kabushiki Kaisha, Tokyo 146-8501 (JP)
(72) Inventor: Iwasaki, Shingo, Tokyo (JP)
(74) Representative: Weser, Thilo

(57) **Abstract**

A service flow process apparatus receives a first message from a first Web service, and extracts data from the first message based on description in a service flow description document. The service flow process apparatus extracts position information showing a position in a second message corresponding to the extracted data from the Web service flow description document, and constructs a structure of the second message based on the extracted position information. The service flow process apparatus inserts the data extracted from the first message into the structure of the second message based on the position information extracted from the Web service flow description document, and transmits the second message into which the data extracted from the first message has been inserted to a second Web service.

## Description

### BACKGROUND OF THE INVENTION

### Field of the Invention

The present invention relates to a service flow process method and apparatus.

### Description of the Related Art

Heretofore, techniques are known for sequentially executing Web services in accordance with a structured document (Web service flow description document) for sequentially executing Web services (e.g., Business Process Execution Language for Web Services (BPEL4WS) version 1.1,
http://www.ibm.com/developerworks/jp/webse rvices/library/ws-bpelcoll/). As for this structured document, Web Services Business Process Execution Language (WS-BPEL) is used. WS-BPEL is a Web services flow description language described in extensible Markup Language (XML). The WS-BPEL specification is administered by the Organization for the Advancement of Structured Information Standards (OASIS) (Web Services Business Process Execution Language Version 2.0,
http://docs.oasis-open.org/wsbpel/2.0/OS/wsbpel-v2.0-OS.html).

Note that with WS-BPEL, Web Services Description Language (WSDL) is used as an interface for identifying Web services. WSDL is a language used for describing Web Service interfaces, with the WSDL specification being published by the World Wide Web Consortium (W3C). For details see http://www.w3.org/TR/wsdl.

A flow process apparatus that reads a Web service flow description document and sequentially executes Web services in accordance with the descriptive content thereof performs processing to execute Web services with the following flow, according to the content of the Web service flow description.

Firstly, a Web service interface description document (WSDL) for the Web service to be invoked is read. A schema language (XML Schema) constituting a structure definition described in WSDL is then referenced in order to find out the type of message that the target Web service is able to receive. The XML Schema is defined by the W3C. The framework of a Simple Object Access Protocol (SOAP) message in XML format is generated by using the referenced schema. SOAP is defined by the W3C.

Next, data to be transmitted is inserted into the generated framework of the SOAP message using an XPath (XML Path Language) to complete the SOAP message, and the SOAP message is transmitted. XPath is defined by the W3C. The response from the Web service as a result of being invoked is received as a SOAP message.

Next, processing is performed to extract data from the received SOAP message, process the message or the like. The processing result is then generated as a SOAP message with the above method and transmitted to the next Web service. The flow process apparatus performs processing with the above flow.

Normally, the Document Object Model (DOM) defined by the W3C is used when dealing with XML and other structured documents. Therefore, the DOM interface is generally used even in the process of XML SOAP message generation.

However, with the above process flow, values were inserted into requisite elements after firstly generating the framework of the SOAP message, which meant that elements in which values had not actually been inserted sometimes got written up as the SOAP message. Thus, there was also the problem of unnecessary information being transmitted to invoked Web services.

If an entire schema is read at one time using the DOM when generating a SOAP message, resources such as memory will be greatly consumed if the SOAP message itself is large. In this case, the processable resource size may possibly be exceeded when generating a SOAP message, particularly if the flow process apparatus is executed by a low-resource device or the like. A processing error would thus occur at this point, making it difficult to proceed to the subsequent processing described in the Web service flow description document.

### SUMMARY OF THE INVENTION

An object of the present invention is to transmit a message that does not include unnecessary information to a Web service.

Another object of the present invention is to generate a message to transmit to a Web service, using few resources.

According to one aspect of the present invention, there is provided a service flow process method according to claims 1 to 5.

According to another aspect of the present invention, there is provided a web service flow process apparatus according to claims 6 to 10.

Further features of the present invention will become apparent from the following description of exemplary embodiments with reference to the attached drawings.

### BRIEF DESCRIPTION OF THE DRAWINGS

FIG. 1 shows a schematic of a Web service flow process apparatus in a first embodiment.

FIG. 2 shows an exemplary internal processing configuration of a message generation and structure verification unit 103.

FIG. 3 shows an exemplary composition of a Web service flow description document 106 in the first embodiment.

FIG. 4 shows a specific example of a SOAP message generation process in the first embodiment.

FIG. 5 shows an internal processing configuration of a message generation and structure verification unit 103 in a second embodiment.

FIGS. 6A and 6B show a specific example of SOAP message verification in the second embodiment.

FIG. 7 illustrates exemplary identification information in a third embodiment.

FIG. 8 shows an exemplary hardware configuration of an information processing apparatus that functions as a Web service flow process apparatus.

### DESCRIPTION OF THE EMBODIMENTS

Hereinafter, best modes for carrying out the invention will be described in detail with reference to the drawings.

### First Embodiment

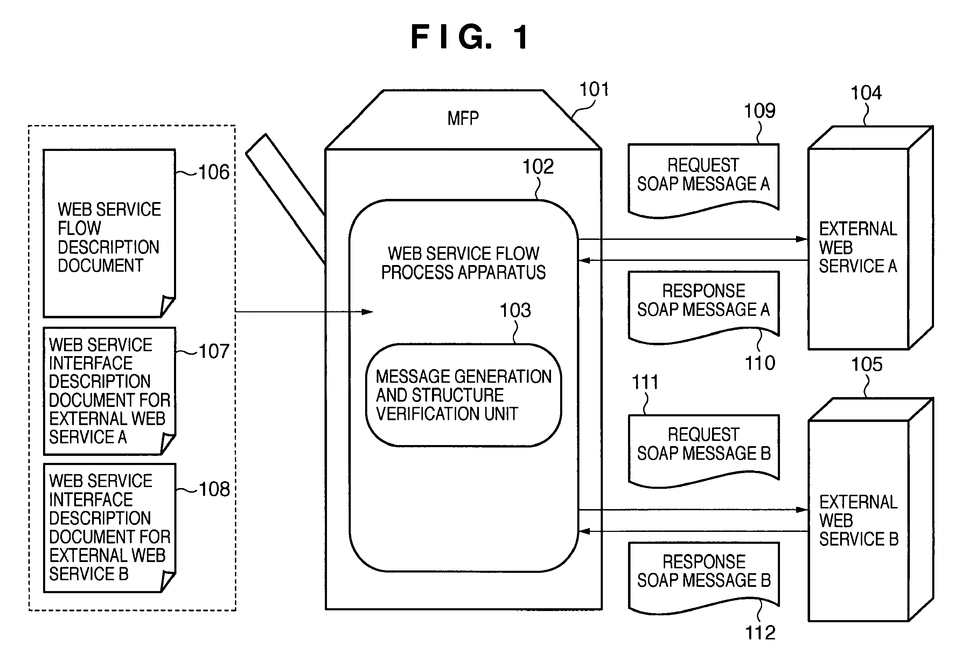

A schematic of a process of generating a message in structured document format using identification information will be described as a first embodiment using FIGS. 1 to 4. Note that the identification information will be described as an XPath (XML path language).

FIG. 1 shows a schematic of a Web service flow process apparatus in the first embodiment. In FIG. 1, 101 is a multifunction peripheral (MFP) that has a plurality of functions such as copy, scan and print.
In the first embodiment, the MFP 101 functions as a Web service flow process apparatus 102 capable of reading a Web service flow description document and sequentially executing Web services in accordance with the descriptive content of the read description document.

Further, the Web service flow process apparatus 102 includes an XPath structured document format message generation and structure verification unit 103.

Reference numeral 104 is an external Web service A that is invoked by the Web service flow process apparatus 102, and 105 is an external Web service B that is invoked by the Web service flow process apparatus 102. The external Web service A 104 and the external Web service B 105 are connected to the Web service flow process apparatus 102 via a network (not shown).

Reference numeral 106 is a Web service flow description document describing a procedure for sequentially invoking the external Web service A 104 and the external Web service B 105. Reference numeral 107 is a Web service interface description document for the external Web service A, and reference numeral 108 is a Web service interface description document for the external Web service B. The detailed composition of these description documents will be described below.

Here, the process of generating a message in structured document format using identification information by the message generation and structure verification unit 103 of the Web service flow process apparatus 102 will be described.

Firstly, the Web service flow process apparatus 102 reads the Web service flow description document 106 from a server connected to the network (not shown), and starts a flow process in accordance with the description content thereof. Note that the Web service flow process apparatus 102 may read the Web service flow description document 106 stored in a storage medium (not shown) in the MFP 101 via a drive device.

The descriptive content of the Web service flow description document 106 is then sequentially executed up to the descriptive content associated with invoking the external Web service A 104.

Next, the message generation and structure verification unit 103 generates a request SOAP message A 109. At this time, information on the XPath described in the Web service flow description document 106 (and also the content of the Web service interface description document 107 for the external Web service A if performing verification) is used. Note that message generation and verification will be detailed below.

Next, the message generation and structure verification unit 103 transmits the generated request SOAP message A 109 to the external Web service A 104. Processing is performed on the request SOAP message A 109 by the external Web service A 104, and a response SOAP message A 110 is returned as a result. The message generation and structure verification unit 103 receives the response SOAP message A 110.

Next, the message generation and structure verification unit 103 extracts information on the processing result from the response SOAP message A 110. A request SOAP message B 111 is then generated using the information extracted here and the information on the XPath described in the Web service flow description document 106 (and also the content of the Web service interface description document 108 for the external Web service B if performing verification).

Next, the message generation and structure verification unit 103 transmits the generated request SOAP message B 111 to the external Web service B 105. Processing is performed on the request SOAP message B 111 by the external Web service B 105, and a response SOAP message B 112 is returned as a result. The Web service flow process apparatus 102 receives the response SOAP message B 112.

Thus, the message generation and structure verification unit 103, when invoking the external Web service B 105, generates the requisite request SOAP message B 111. At this time, the content of the Web service flow description document 106 and the content of the response SOAP message A 110 (and also the content of the Web service interface description document 108 for the external Web service B if performing verification) is used.

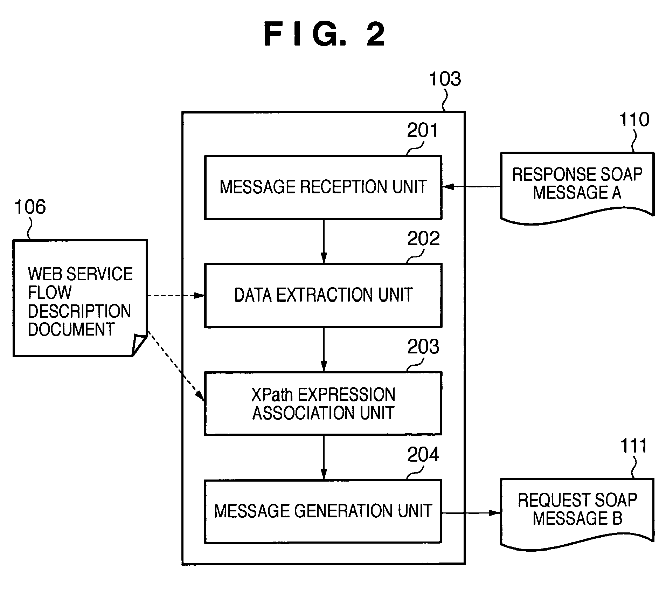

Here, the detailed content of processing by the message generation and structure verification unit 103 will be described using FIG. 2. Note that FIG. 2 shows a process of generating the request SOAP message B 111 when invoking the Web service of the external Web service B 105.

FIG. 2 shows an example illustrating the configuration of the message generation and structure verification unit 103 broken down into functions. In FIG. 2, 201 is a message reception unit that receives the response SOAP message A 110 from the external Web service A 104. Reference numeral 202 is a data extraction unit that extracts requisite data from the response SOAP message A 110 using the content of the XPath described in the Web service flow description document 106.

This XPath is identification information that includes structural information of the message and indicates a specific location in the message.

Reference numeral 203 is an XPath expression association unit that extracts the data extracted by the data extraction unit 202 and an XPath expression associated with the Web service to be invoked next from the Web service flow description document 106, and retains this information as associated information. The XPath expression associated with the Web service to be invoked next is identification information that includes structural information of the message described in the Web service flow description document 106 into which the extracted data is to be inserted, and indicates a specific location in the message into which the data is to be inserted.

Reference numeral 204 is a message generation unit that generates a message by constructing a request SOAP message from the information associated by the XPath expression association unit 203. Here, the request SOAP message B 111 is generated using the XPath expression associated with the Web service to be invoked next and the data extracted by the data extraction unit 202 corresponding thereto.

While the flow of processing by the message generation and structure verification unit 103 is as described above, the processing content will be described in detail next using a specific Web service flow description document.

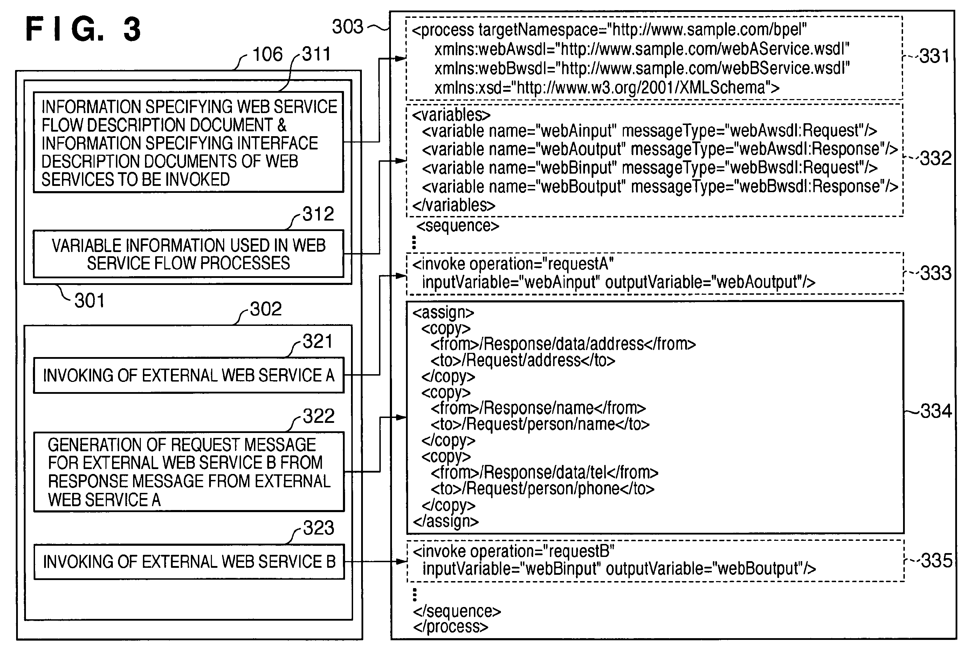

FIG. 3 shows an exemplary composition of the Web service flow description document 106 in the first embodiment. The Web service flow description document 106 is constituted by a declaration portion 301 that describes a declaration of variables to be used by programs or the like, and a logic portion 302 that describes the logic of the flow processes or the like.

Note that while the content of all flow processes is included in the logic portion 302, description for receiving a request message from a client and description for returning a response message to a client have been omitted.

Firstly, in the declaration portion 301, 311 is information specifying the Web service flow description document 106 itself and information specifying the interface description documents (107, 108) of the Web services to be invoked. Reference numeral 312 is variable information used in the Web service flow processes.

In the logic portion 302, reference numeral 321 is the content of a process of invoking the external Web service A, causing the external Web service A to perform processing, and receiving a response message containing the processing result. Reference numeral 322 is the content of a process of extracting the processing result from the received response message containing the processing result, and generating a request message that is interpretable by the external Web service B. Reference numeral 323 is the content of a process of invoking the external Web service B, causing the external Web service B to perform processing, and receiving a response message containing the processing result.

In FIG. 3, reference numeral 303 is an example of specific description corresponding to the composition of the Web service flow description document 106. In this example, a WS-BPEL process flow for Web services is described in a language that conforms to standard specifications for description in an XML document. Note that WS-BPEL is short for Web Services Business Process Execution Language, and XML is short for extensible Markup Language.

Here, detailed description will be given while comparing the composition of the Web service flow description document 106 and the exemplary description 303. Reference numeral 331 corresponds to the descriptive content 311 in the declaration portion 301.
With reference numeral 331, information specifying the Web service flow description document 106 itself and information specifying the interface description documents (WSDL documents) of the Web services to be invoked (external Web services A and B) is described in a namespace as attribute values of a <process> tag.

Reference numeral 332 corresponds to the descriptive content 312 in the declaration portion 301. With reference numeral 332, type information of message variables used when performing a flow process is described using respective <variable> tags.

Reference numeral 333 corresponds to the descriptive content 321 in the logic portion 302. With reference numeral 333, the content of the process of invoking the external Web service A, causing processing to be performed, and receiving a response message containing the processing result is described using an <invoke> tag.

Reference numeral 334 corresponds to the descriptive content 322 in the logic portion 302. With reference numeral 334, the content of the process of extracting the processing result from a received response message using the XPath, and generating a request message that is interpretable by the external Web service B from the extracted processing result and the XPath is described using an <assign> tag or the like.

Reference numeral 335 corresponds to the descriptive content 323 in the logic portion 302. With reference numeral 335, the content of the process of invoking the external Web service B, causing processing to be performed, and receiving a response message containing the processing result is described using an <invoke> tag.

The <assign> and <invoke> tags corresponding to the descriptive content of the logic portion 302 are called activities in WS-BPEL. Representation of Web service flow processes is abstracted, in that the <assign> tag indicates processing or converting a message, and the <invoke> tag indicates invoking an external Web service.

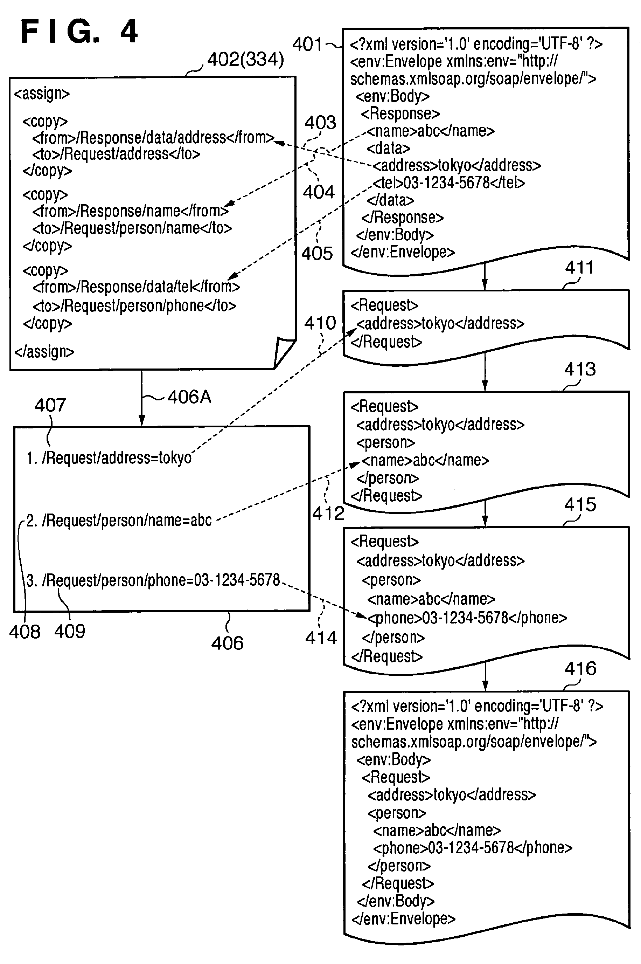

Next, the flow of the process of generating a SOAP message by the message generation and structure verification unit 103 will be described using the specific example of a SOAP message shown in FIG. 4.

Reference numeral 401 is a specific example of a response SOAP message A 110 from the external Web service A 104. Reference numeral 402 is the portion indicated by 334. That is, the content of the process of extracting the processing result from a received response message A 110 using the XPath, and generating a request message B 111 that is interpretable by the external Web service B from the processing result and the XPath.

Processing by the data extraction unit 202 will be described using reference numerals 401 and 402. In reference numeral 402, <copy> tags are described at the subsequent level to an <assign> tag, and <from> and <to> tags are described at the subsequent level to the <copy> tags. A <copy> tag is interpreted as indicating to extract data from a location in the receive message corresponding to the XPath described in the <from> tag, and insert the data into a location of the message to be transmitted next corresponding to the XPath described in the <to> tag.

Therefore, as shown by reference numeral 403, the data "tokyo" in the <address> tag is firstly extracted from the response SOAP message A using "/Response/data/address" shown in the <from> tag. Similarly, the data "abc" as shown by reference numeral 404, and the data "03-1234-5678" shown by reference numeral 405 is extracted.

That is, to extract this data, an XPath that includes structural information of the (response) message described in the Web service flow description document 106 (303) and a <from> tag indicating a specific location in the (response) message is used as identification information.

Next, processing (406A) by the XPath expression association unit 203 will be described using reference numeral 406. Reference numeral 406 is obtained by associating the extracted data of reference numerals 403 to 405 with the XPaths described in the <to> tags of reference numeral 402. With reference numeral 407, the extracted data "tokyo" of reference numeral 403 is associated with "/Request/address" described in the corresponding <to> tag. Similarly, with reference numerals 408 and 409, "abc" and "03-1234-5678" are respectively associated with "/Request/person/name" and "/Request/person/phone" and retained.

The XPath described in these <to> tags is identification information that includes structural information of the message described in the Web service flow description document showing the insertion destination of the extracted data of reference numerals 403 to 405, and indicates a specific location in the message.

Next, the process of constructing a message in the message generation unit 204 using the associated information of reference numeral 406 in order will be described. Firstly, the XML structure <Request><address></address> </Request> is constructed from XPath "/Request/address" in the information of reference numeral 407, as shown by reference numeral 410. The message of reference numeral 411 in which data has been inserted into the <address> tag is then generated. Next, the information of reference numeral 408 is embedded in the message of reference numeral 411, as shown by reference numeral 412, so that the message of reference numeral 413 in which information has been embedded below the <person> tag that follows the <address> tag is generated. Next, the information of reference numeral 409 is embedded in the message of reference numeral 413, as shown by reference numeral 414, so that the message of reference numeral 415 in which information has been embedded in the <phone> tag that follows the <name> tag is generated. Then, the SOAP message of reference numeral 416 is finally generated, with the generated message of reference numeral 415 embedded between <Body> tags, and the generated SOAP message is transmitted to the external Web service B 105. Reference numeral 416 is a specific example of a request SOAP message B 111 to the external Web service B 105.

The first embodiment enables resources consumed when generating a SOAP message to be suppressed in comparison to data being inserted after the entire framework of a SOAP message interpretable by the Web service to be invoked has been created from a WSPL document. Here, "resources" refers, for example, to hard disk, memory and the like.

Also, the fact that unnecessary information such as elements into which data has not been inserted is not added to the message eliminates the problem of unnecessary information being transmitted to the Web service that is invoked.

### Second Embodiment

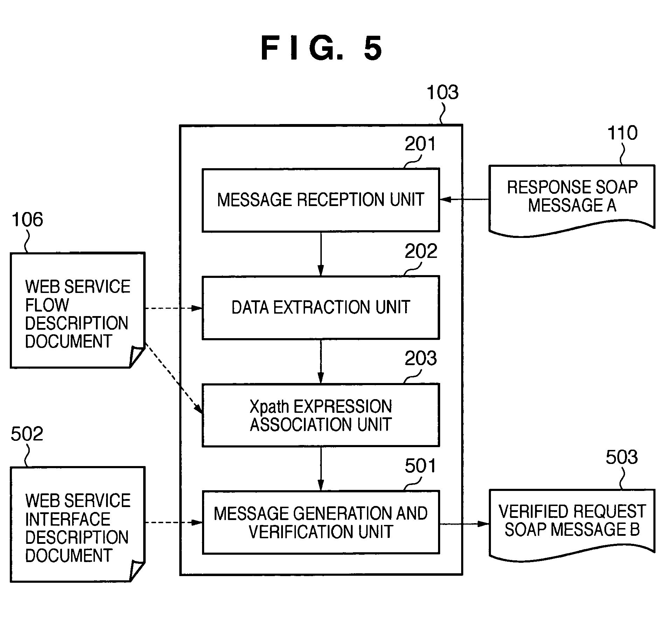

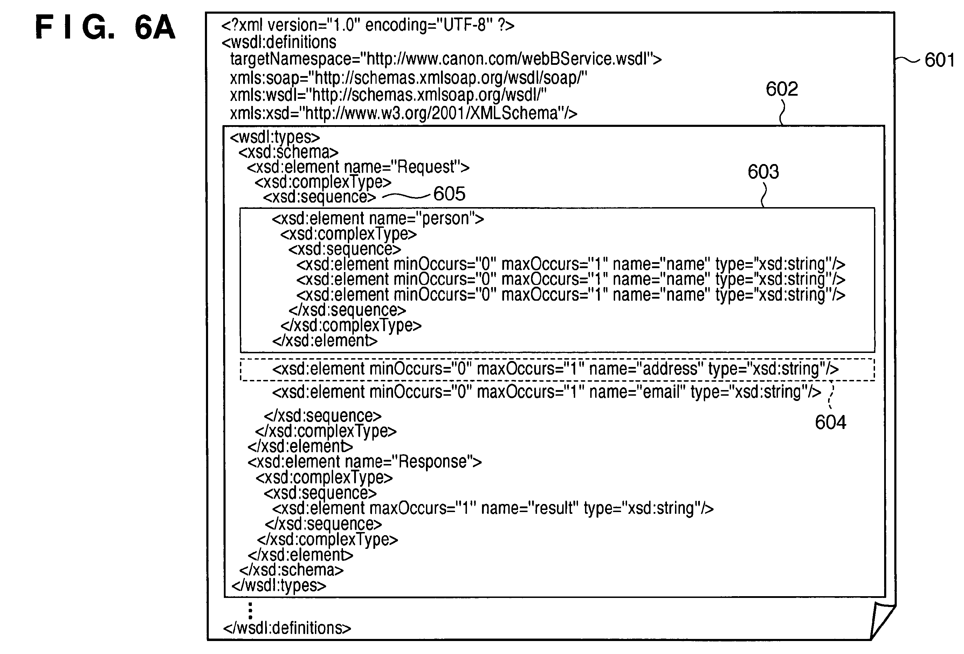

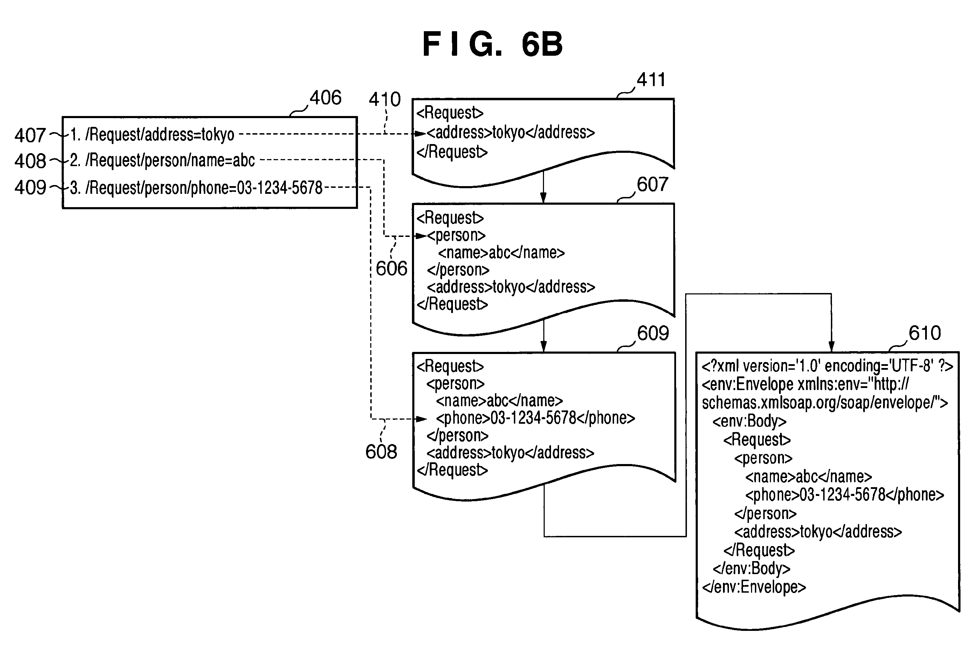

Next, a second embodiment according to the present invention will be described in detail with reference to the drawings. Similarly to the first embodiment, identification information is also handled as an XPath in the second embodiment. In the first embodiment, the message generation unit 204 constructs a message in order from the associated information shown in reference numeral 406. In the second embodiment, a process of verifying the accuracy of the message is performed when constructing a message. This process will be described using FIGS. 5 and 6.

Note that description will be given using the reference numerals in FIG. 2, since the message generation and structure verification unit 103 shown in FIG. 5 is in part the same as the configuration shown in FIG. 2. Also, description will be given using the reference numerals in FIG. 4, since the information associating XPaths with extracted information shown in FIGS. 6A and 6B and the process of message generation are in part the same as the information shown in FIG. 4.

Reference numeral 501 is a message generation and verification unit. The message generation and verification unit 501 reads schema information showing the structure of a message from a Web service interface description document 502 for the external Web service B 105. A message is then constructed (generated) while verifying the accuracy of the structure through comparison with the associated information 406 from the XPath expression association unit 203, and the generated message is transmitted to the external Web service B 105 as a verified request SOAP message B 503.

Next, the process flow shown in FIG. 5 will be described using a specific example of a message. In FIGS. 6A and 6B, the processing up to constructing the message 411 is similar to the processing illustrated in FIG. 4. Reference numeral 601 is an exemplary Web service interface description document 502 (WSDL document) for the external Web service B 105. Schema information 602 is described in this WSDL document. A structure definition document (XML schema) is described as an example of schema information. A message is generated while performing verification using this information, such that the structure conforms to the schema information.

The schema 602 indicates that information about the <person> tag is described as <xsd:element name="person"> in reference numeral 603. Similarly, information about the <address> tag is described as <xsd:element minOccurs="0" maxOccurs="1" name="address" type="xsd:string"> in reference numeral 604. This schema information is bounded by <xsd:sequence> tags shown by reference numeral 605. Thus, it can be interpreted from the specifications of the schema 602 that the <address> tag 604 must appear following the <person> tag of reference numeral 603.

Therefore, the message generation and verification unit 501 confirms the insertion position when inserting the information of reference numeral 408 into the message of reference numeral 411, and then generates the message of reference numeral 607, as shown by reference numeral 606, rather than generating the message of reference numeral 413. That is, the XML structure shown by the XPath of the information 408 is inserted prior to the <address> tag.

The <phone> tag of reference numeral 409 and the information of the data thereof is then inserted into the optimal position, as shown by reference numeral 608, while confirming the schema information 602, and the message of reference numeral 609 is generated. Then, the SOAP message of reference numeral 610 is finally generated, with the generated message of reference numeral 609 embedded between <Body> tags.

The second embodiment enables a more accurate SOAP message to be transmitted to an external Web service, having further added a verification function to the SOAP message generation in the first embodiment.

### Third Embodiment

Next, a third embodiment according to the present invention will be described in detail with reference to the drawings. While identification information indicating a specific position was handled as an XPath in the first and second embodiments, identification information is handled as information other than an XPath in the third embodiment.

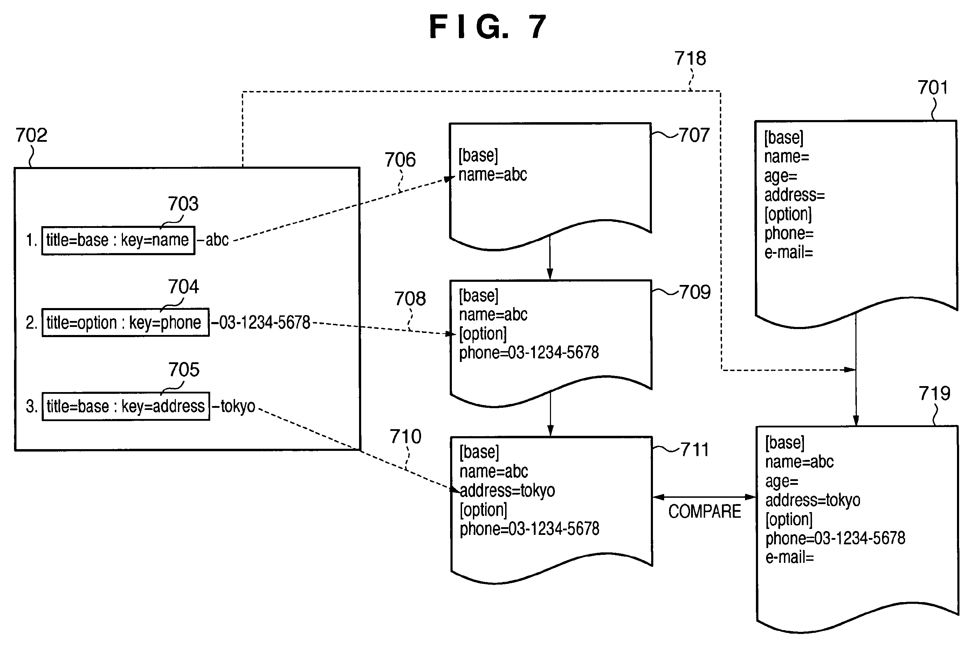

FIG. 7 illustrates exemplary identification information in the third embodiment. Assume that the message format interpretable by an external service is the format shown in reference numeral 701, for example. Reference numeral 702 is information associating data and identification information that enables data acquisition and insertion to be performed with respect to the message format of reference numeral 701. The portions shown by reference numerals 703, 704 and 705 are described in respective service flow description documents. Firstly, the associated information is mapped to the form of reference numeral 707, such that [base] is mapped from title=base, and name=abc is mapped from key=name and the data abc, as shown by reference numeral 706.

Similarly, the associated information ([option], phone=03-1234-5678) is mapped as shown by reference numeral 708, as shown in reference numeral 709. Because [base] already exists, address=tokyo is inserted and mapped as shown in reference numeral 711 by adding the [base] item, as shown by reference numeral 710. A message to an external service is generated with this flow.

The generated message 711 is compared with reference numeral 719 obtained by inserting the data from the information 702 into the message 701 showing only a framework. The message 719 is obtained by inserting data from the associated information of reference numeral 702, as shown by reference numeral 718, into the message 701 showing only a framework into which data has yet to be inserted, for example. Reference numeral 719 includes information not containing data such as age= and e-mail= that is not in reference numeral 711. Therefore, message generation is performed without providing unnecessary information to the external service, as a result of using the message 711. It is anticipated that if the message of reference numeral 701 showing a framework is itself voluminous, a large amount of memory will be consumed at the point at which the whole message is read.

Therefore, the amount of memory consumed can also be reduced by constructing a message in order with the above flow.

### Fourth Embodiment

Next, a fourth embodiment according to the present invention will be described in detail with reference to the drawings. While an example was given in the first embodiment in which the present invention was applied to an MFP, the present invention is not limited to this, and can also be applied to an information processing apparatus such as a personal computer.

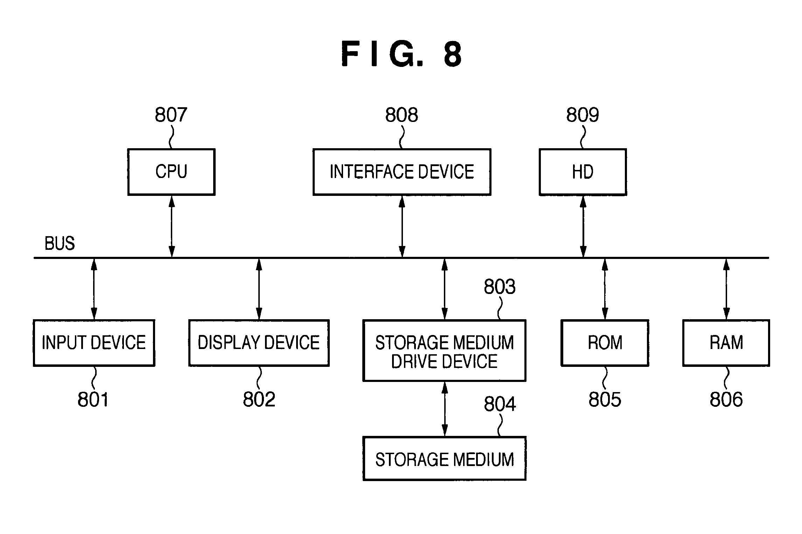

FIG. 8 shows an exemplary hardware configuration of an information processing apparatus that functions as a Web service flow process apparatus. As shown in FIG. 8, the information processing apparatus includes an input device 801, a display device 802, a storage medium drive device 803, a ROM 805, a RAM 806, a CPU 807, an interface device 808, and a hard disk (HD) 809.

The input device 801 is constituted by a keyboard, a mouse and the like that are operated by an operator, and is used to input various types of operating information and the like to the information processing apparatus. The display device 802 is constituted by a display or the like that is used by the operator, and is used to display various types of information (or windows) and the like. The interface device 808 is an interface for connecting the information processing apparatus to a network or the like.

Programs for processing by the above message generation and structure verification unit 103 and the like are provided to the information processing apparatus by a storage medium 804 such as a CD-ROM, for example, or downloaded through a network or the like. The storage medium 804 is set in the storage medium drive device 803, and the programs are installed on the HD 809 from the storage medium 804 via the storage medium drive device 803.

The ROM 805 stores programs and the like that are initially read when the information processing apparatus is powered on. The RAM 806 is the main memory of the information processing apparatus. The CPU 807 stores programs read out from the HD 809 to the RAM 806, and realizes the aforementioned processing content by executing the programs. The HD 809 stores Web service flow description documents, Web service interface description documents and the like, for example, other than programs.

Note that the present invention may be applied to a system constituted by a plurality of devices (e.g., host computer, interface device, reader, printer, etc.) or an apparatus composed of a single device (e.g., copier, fax machine, etc.).

The objects of the present invention are also achieved by a recording medium on which the program code of software for realizing the functions of the foregoing embodiments is recorded being supplied to a system or an apparatus, and a computer (CPU or MPU) in the system or apparatus reading out and executing the program code stored on the recording medium.

In this case, the actual program code read out from the computer-readable recording medium realizes the functions of the foregoing embodiment, and the recording medium on which the program code is recorded constitutes the present invention.

Recording media that can be used for supplying the program code include, for example, flexible disk, hard disk, optical disk, magneto-optical disk, CD-ROM, CD-R, magnetic tape, nonvolatile memory card and ROM.

The present invention encompasses not only the modes by which the functions of the foregoing embodiments are realized but also the following modes, as a result of executing the program code read out by a computer. That is, the present invention also encompasses a mode where an operating system (OS) or the like running on the computer performs part or all of the actual processing based on instructions in the program code, and the functions of the foregoing embodiments are realized as a result of this processing.

Further, the present invention also encompasses a mode where the program code read out from the recording medium is written to a memory provided in a function expansion board inserted in the computer or a function expansion unit connected to the computer, and then a CPU or the like provided in the function expansion board or the function expansion unit performs part or all of the actual processing based on instructions in the program code, with the functions of the foregoing embodiments being realized as a result of this processing.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A service flow process method for transmitting a second message to a second Web service based on a Web service flow description document and a first message received from a first Web service, comprising:
a data extraction step of extracting data from the first message based on description in the Web service flow description document (403, 404, 405); and
a position information extraction step of extracting position information showing a position in the second message corresponding to the extracted data from the Web service flow description document (406A), **characterized by** further comprising
a construction step of constructing a structure of the second message based on the position information extracted from the Web service flow description document (410, 412, 414, 606, 608),
wherein in the construction step, the data extracted from the first message is inserted into the structure of the second message based on the position information extracted from the Web service flow description document (410, 412, 414, 606, 608).

2. The method according to claim 1, wherein in the position information extraction step, an XPath showing a position in the second message corresponding to the extracted data is extracted as the position information.

3. The method according to claim 1, wherein in the construction step, information corresponding to the position shown by the position information extracted from the Web service flow description document is extracted from structural information showing a structure of a message that is received by the second Web service, and the structure of the second message is constructed based on the information extracted from the structural information (606, 608).

4. The method according to claim 1, wherein
in the data extraction step, the first message is received in response to a request to the first Web service, and
in the position information extraction step, the extracted data is retained in association with the position information.

5. The method according to claim 1, wherein in the construction step, the structure of the second message, which is a structured document, is constructed.

6. A service flow process apparatus for transmitting a second message to a second Web service based on a Web service flow description document and a first message received from a first Web service, comprising:
data extraction means for extracting data from the first message based on description in the Web service flow description document (202); and
position information extraction means for extracting position information showing a position in the second message corresponding to the extracted data from the Web service flow description document (203), **characterized by**:
further comprising construction means for constructing a structure of the second message based on the position information extracted from the Web service flow description document (204, 501),
wherein the construction means inserts the data extracted from the first message into the structure of the second message based on the position information extracted from the Web service flow description document.

7. The apparatus according to claim 6, wherein the position information extraction means extracts an XPath showing a position in the second message corresponding to the extracted data as the position information.

8. The apparatus according to claim 6, wherein the construction means extracts information corresponding to the position shown by the position information extracted from the Web service flow description document from structural information showing a structure of a message that is received by the second Web service, and constructs the structure of the second message based on the information extracted from the structural information.

9. The apparatus according to claim 6, wherein
the data extraction means receives the first message in response to a request to the first Web service, and
the position information extraction means retains the extracted data in association with the position information.

10. The apparatus according to claim 6, wherein the construction means constructs the structure of the second message, which is a structured document.

11. A computer program for causing a computer to execute the method of one of claims 1 to 5.

12. A computer-readable recording medium on which the program of claim 11 is recorded.
